# EUROPÄISCHE PATENTSCHRIFT

(11) **EP 0 779 474 B1**
(45) Veröffentlichungstag und Bekanntmachung des Hinweises auf die Patenterteilung: **02.05.2002**
(21) Anmeldenummer: 96890175.1
(22) Anmeldetag: 27.11.1996
(51) Int. Cl.: F21V 7/00, F21S 8/10

(54) **Doppelreflektorscheinwerfer**
Headlamp with double reflector
Projecteur à double réflecteur

(30) Priorität: 15.12.1995 DE 29519938 U
(43) Veröffentlichungstag der Anmeldung: 18.06.1997
(73) Patentinhaber: Zizala Lichtsysteme GmbH, A-3250 Wieselburg (AT)
(72) Erfinder: Aichinger, Michael, 3620 Spitz/Donau (AT); Fitzthum, Werner, 3252 Petzenkirchen (AT)
(74) Vertreter: Matschnig, Franz, Dipl.-Ing.

(56) Entgegenhaltungen:
- EP-A- 0 466 605
- FR-A- 1 353 038
- FR-A- 1 533 682
- FR-A- 2 123 883
- FR-A- 2 135 432
- FR-A- 2 722 270
- GB-A- 379 568
- GB-A- 1 121 286

## Beschreibung

Die Erfindung betrifft einen Doppelreflektorscheinwerfer, bei dem ein Innenreflektor innerhalb eines Außenreflektors angeordnet ist und die Reflektoren in Leuchtrichtung tandemartig aufeinanderfolgen und über eine gemeinsame Deckscheibe abstrahlen.

Derartige Scheinwerfer sind seit langem und in verschiedensten Ausführungen bekannt, z.B. aus der GB-PS 1 187 846. Dort ist innerhalb eines vorzugsweise durch eine Biluxlampe gespeisten Parabolscheinwerfers ein tiefgestellter, vorzugsweise durch eine Halogenlampe gespeister kleinerer Parabolreflektor vorgesehen, dessen Achse gegenüber der Achse des Parabolscheinwerfers vorteilhaft etwas nach oben geneigt ist.

Der kleinere Reflektor stellt somit ein Hindernis im Strahlengang des Parabolscheinwerfers dar, und um dessen Abdeckwirkung auszuschalten, ist zwischen der Rückseite des kleineren Reflektors und der Biluxlampe eine Flachlinse in Form einer Fresnellinse vorgesehen, um vom Reflektor des Parabol-Hauptscheinwerfers reflektiertes Licht am kleineren Reflektor vorbeizustrahlen. Mit dieser bekannten Konstruktion läßt sich ein normgemäßes Lichtmuster nicht erzielen.

Erfindungsgemäß wird demgegenüber vorgeschlagen, daß der Außenreflektor ein Freiflächenreflektor ist, dessen Krümmung so ausgebildet ist, daß der Außenreflektor Licht am Innenreflektor vorbei reflektiert.

Ein Freiflächenreflektor ist dadurch definiert, daß ausgehend von einem vorgegebenen Leuchtmuster die lokale Krümmung des Reflektors rückgerechnet wird - in diesem Fall unter Berücksichtigung der Geometrie des Innenreflektors (oder eines anderen vor der Lichtquelle des Außenreflektors liegenden Elementes).

Dabei sollen folgende Möglichkeiten umfaßt werden:
- Außenreflektor: Innenreflektor
- Abblendlicht: Fernlicht
- Nebellicht: Fernlicht
- Abblendlicht: Nebellicht,
von denen die erste am bevorzugtesten ist.

Bevorzugt wird dabei, daß Außenreflektor und Innenreflektor zumindest im wesentlichen dieselbe Höhe aufweisen, so daß eine Dreiteilung der Lichtaustrittsflächen des Doppelreflektorscheinwerfers erzielt wird, wobei bevorzugt Abblendlicht über deren Seitenbereiche und Fernlicht über deren Zentralbereich abgegeben wird.

Weiterhin bevorzugt wird, daß der Außenreflektor ein Flachreflektor ist, so daß die Bauhöhe des Scheinwerfers niedrig gehalten werden kann, wie dies für Motorräder bevorzugt ist.

Zur Dreiteilung der Lichtaustrittsfläche ist bevorzugt der Innenreflektor ein Reflektor mit zur optischen Achse parallelen, vorzugsweise senkrechten Seitenwänden. Er kann ein Parabol- oder Freiflächenreflektor sein.

Zur Vermeidung von Erhitzung der Rückseite des Innenreflektors kann dessen gewölbte Rückfläche zumindest teilweise verspiegelt oder weiß sein.

Eine Ausführungsform für einen Motorradscheinwerfer für Abblend- und Fernlicht, die die Kurvenneigung des Fahrzeugs berücksichtigt, ist dadurch gekennzeichnet, daß in der Deckscheibe im Durchgangsbereich für Fernlicht V-förmige Streurippen zur Erzielung einer größeren Höhe der seitlichen Randbereiche des Fernlichtmusters vorgesehen sind.

Weiterhin bevorzugt ist generell, daß dem Außenreflektor eine Lichtquelle mit horizontaler, vorzugsweise in der optischen Achse verlaufender Wendel und dem Innenreflektor eine Lichtquelle mit horizontaler, im rechten Winkel zur optischen Achse verlaufender Wendel zugeordnet ist, sowie für einen Motorradscheinwerfer, daß der Scheinwerfer in Vertikalrichtung zwischen zwei Anschlägen verschwenkbar ist, so daß man eine Schnellverstellung zwischen Ein- und Zweipersonenbetrieb hat.

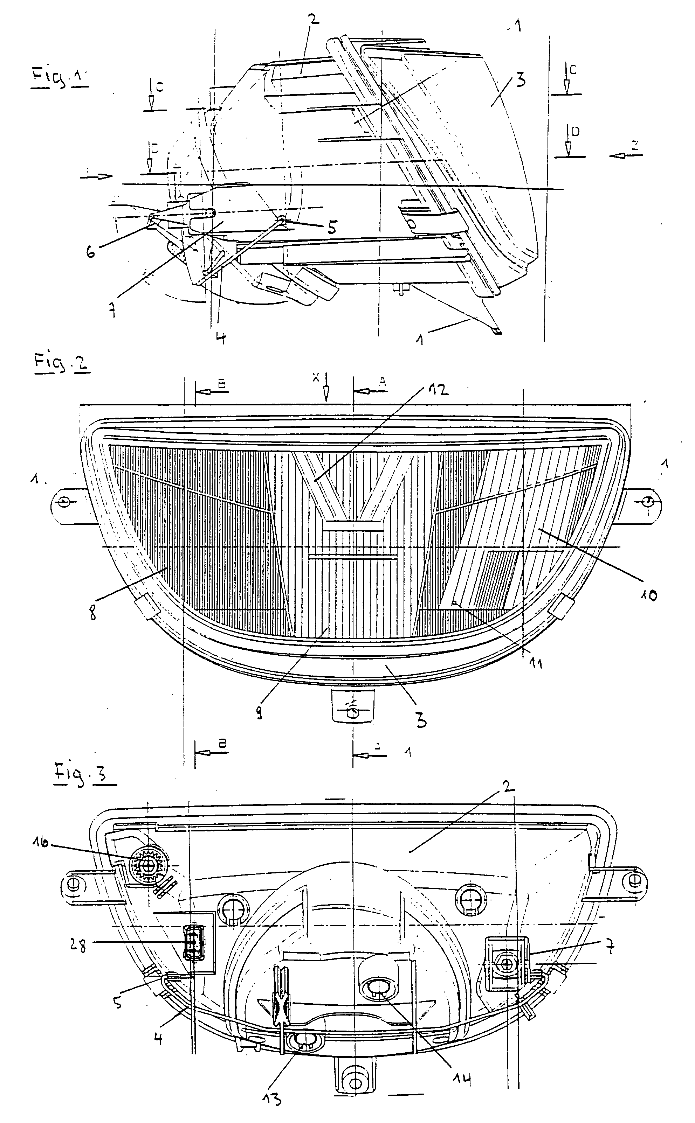

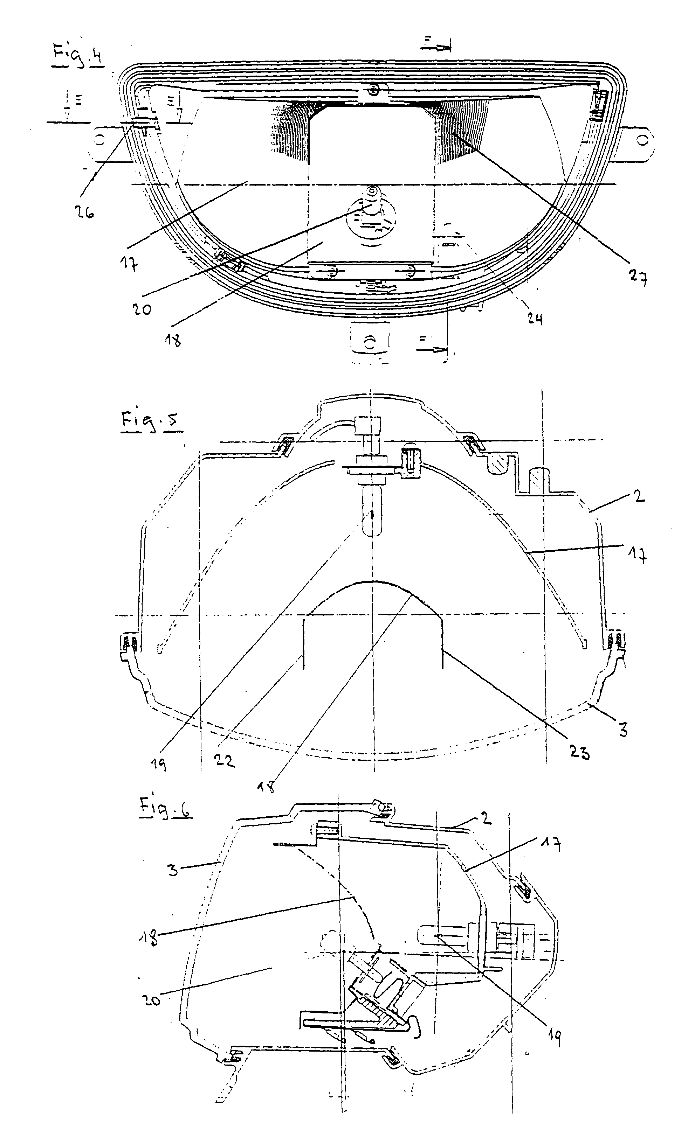

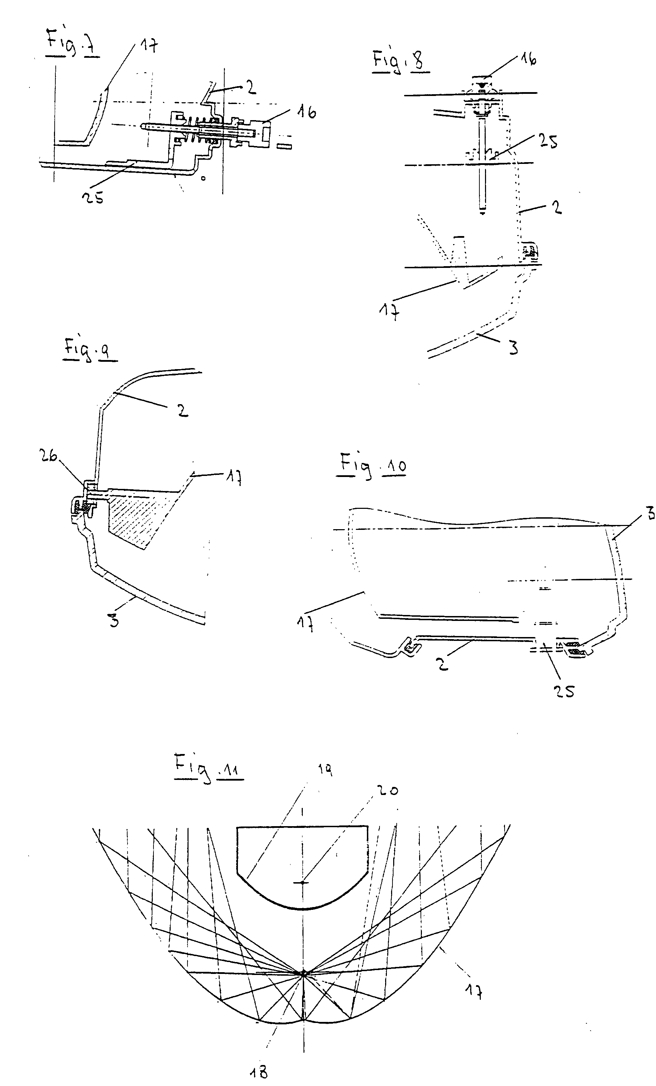

Die Erfindung wird nachstehend an einem Ausführungsbeispiel betreffend einen Motorradscheinwerfer für Abblend- und Fernlicht unter Bezugnahme auf die Zeichnung näher erläutert, in der Fig. 1 eine Seitenansicht, Fig. 2 eine Stirnansicht in Pfeilrichtung Z gemäß Fig. 1, Fig. 3 eine Rückansicht in Pfeilrichtung Y gemäß Fig. 1, Fig. 4 eine Stirnansicht in Pfeilrichtung Z gemäß Fig. 1 bei abgenommenem Frontglas, Fig. 5 eine Schnittansicht D-D gemäß Fig. 1, Fig. 6 eine Schnittansicht A-A gemäß Fig. 2, Fig. 7 ein Schnittdetail gemäß B-B in Fig. 2, Fig. 8 ein gedreht gezeichnetes Schnittdetail gemäß C-C in Fig. 1, Fig. 9 ein Schnittdetail gemäß E-E in Fig. 4, Fig. 10 ein Schnittdetail gemäß F-F in Fig. 4 sowie Fig. 11 den Strahlengang am Abblendlichtreflektor gemäß Fig. 5 zeigt.

In Fig. 1 erkennt man einen Einbauscheinwerfer mit drei Befestigungslaschen 1, einem Gehäuse 2 und einer Frontscheibe 3. Das Gehäuse 2 weist einen Metallbügel 4 mit zwei seitlichen Schwenklagern 5 auf, der einen Deckel hält. Ein Verschwenkhebel 6 ist in einer Halterung 7 am Gehäuse 2 zwischen zwei Endlagen um 90° verschwenkbar gelagert und greift am Gehäuse 2; sein Nachabwärtsschwenken kippt den Reflektor in Leuchtrichtung nach unten - der Hebel 6 dient der Leuchtweitenverstellung beim Soziusbetrieb des Motorrads.

Aus Fig. 2 erkennt man die Dreiteilung 4 der Lichtaustrittsfläche des Frontglases in Sektoren 8,9,10, von denen die seitlichen Sektoren 8 und 10 ausschließlich Abblendlicht (Sektor 10 weist besondere Streurippen 11 zur Asymmetrie des Abblendlichtmusters auf) und der mittlere Sektor 9 ausschließlich Fernlicht abgeben.

Der Fernlichtsektor weist V-Streurippen 12 auf, die an den Seitenkanten des Fernlichtmusters vertikal verlängerte Bereiche erzeugen, sogenannte Hasenohren, um auch bei Kurvenneigung des Motorrads die Fahrbahn voll auszuleuchten.

Aus Fig. 3 erkennt man vor allem die Zugänge 13 und 14 zu den Glühlampen, die Stromzufuhr 15 mit Klemmenplatte 28 sowie eine Rändelmutter 16 zum Justieren der Reflektoreinheit im Gehäuse 2.

Aus den Fig. 4-6 erkennt man den Außenreflektor 17, den Innenreflektor 18, die Abblendlichtlampe 19 und die Fernlichtlampe 20. Der Außenreflektor 17 ist ein Reflektor, dessen Krümmungen so ausgebildet sind, daß der gesamte von ihm abgestrahlte Lichtstrom den Innenreflektor nicht berührt, sondern außen um ihn herumgeführt und sinngemäß verteilt wird. Der Außenreflektor 17 weist in seiner oberen Hälfte beidseitig seiner vertikalen Mittelebene zwei geriffelte Zonen 27 auf, die dazu dienen, das nahe Vorfeld des Scheinwerfers besser auszuleuchten. Die Abblendlichtlampe 19 ist ausführungsgemäß eine Einfadenhalogenlampe mit in der optischen Achse 21 verlaufender Wendel, während die Wendel der Fernlichtlampe 20 vorzugsweise horizontal im rechten Winkel zur optischen Achse verläuft und vor dem Abblendlicht angeordnet ist.

Der Innenreflektor 18 ist ein Parabolreflektor oder Freiflächenreflektor mit seitlichen Vertikalwänden 22,23 parallel zur optischen Achse 21 und weist - siehe Fig. 4 und Fig. 6 - die gleiche Höhe wie der Außenreflektor auf, so daß eine vertikale Dreiteilung des Lichtaustritts erfolgt. Außenreflektor 17 und Innenreflektor 18 sind miteinander verschraubt, siehe Fig. 4, und können über die Verschraubung gegeneinander justiert werden. In Fig. 4 und Fig. 10 erkennt man weiterhin, daß ein Standlichtlämpchen 24 vorgesehen sein kann.

Außenreflektor 17 und Innenreflektor 18 sind als Einheit im Gehäuse von außen her verschwenkbar. Diese Einheit ist im Gehäuse 2 in einer Dreipunktlagerung wie folgt gehalten. In Fig. 3 ist links oben eine Rändelschraube 16 zu erkennen - das entsprechende Detail ist in Fig. 8 gezeigt. Die Schraubenspindel der Rändelschraube 16 verschiebt bei Drehung eine mit der Reflektoreinheit verbundene Mutter 25.

Aus Fig. 7 (Schnitt B-B in Fig. 2) erkennt man, daß auf der anderen Seite des Scheinwerfers unten eine weitere Rändelschraube 16' vorgesehen ist, deren Schraubenspindel bei Drehung eine mit der Reflektoreinheit verbundene Mutter 25' verschiebt. In der Rückansicht gemäß Fig. 3 ist die Rändelschraube 16' in der Halterung 7 für den Schnellverstellhebel 6 zu erkennen.

Der dritte Anlenkpunkt ist ein Lager 26 auf der Höhe der Rändelschraube 16 in Fig. 3, aber auf der Seite der Rändelschraube 16' - siehe Fig. 9 (Schnitt E-E in Fig. 4). In diesem Lager 26 wird die Reflektoreinheit elastisch gehalten.

Die Rändelschraube 16 dient somit der Horizontalverschwenkung und die Rändelschraube 16' der Vertikalverschwenkung der Reflektoreinheit.

In Fig. 11 ist der Strahlengang am Außenreflektor 17 zu erkennen. In Fig. 11 sind die Strahlengänge der von einem bestimmten Punkt 29 der Außenreflektorlampe 19 jeweils im selben Winkel zur Vertikalebene durch die optische Achse auf die Innenseite des Außenreflektors 17 abgestrahlten Lichtstrahlen in der linken und rechten Reflektorhälfte in einem Horizontalschnitt zu erkennen. Die beiden Reflektorhälften sind unterschiedlich gekrümmt, wobei lediglich die Strahlengänge in der linken Reflektorhälfte vom Zentrum weg erläutert werden. Der Bereich um die ersten beiden Strahlen dient der Seitenausleuchtung, der Bereich um den dritten Strahl der Vorfeldausleuchtung, die anschließenden drei Strahlen - insbesondere der fünfte Strahl - der Asymmetrie (bei Rechtsverkehr nur links vorgesehen) und die folgenden Strahlen der Mitteausleuchtung und der Reichweiteerhöhung.

Aus dem gestrichelten Strahl in der rechten Hälfte von Fig. 11 sieht man, daß man mit den Strahlen, die vom Vorderende des Glühfadens der Außenreflektorlampe 19 ausgehen, näher an den Rand des Innenreflektors 18 herankommt. Dies erlaubt eine Abstimmung dahingehend, daß Direktlicht vermieden wird. Fig. 11 zeigt einen Horizontalschnitt außerhalb der zentralen Lampenfassung - aus Fig. 5 ist zu erkennen, daß der Reflektor 17 dort an der Lampenfassung endet.

Nachdem sämtliches vom Außenreflektor reflektierte Licht am Innenreflektor vorbeigelenkt wird, kann Lichtverlust nur durch Direktlicht der Außenreflektorlampe auf die Rückseite des Innenreflektors auftreten. Um auch dies zu vermeiden, kann beispielsweise die der Außenreflektorlampe zugewandte gewölbte Rückseite des Innenreflektors verspiegelt werden. Nimmt man geringe Lichtverluste in Kauf, wird die Rückseite des Innenreflektors weiß gemacht, um Erwärmung zu vermeiden.

Der dargestellte und beschriebene Motorradscheinwerfer weist eine äußerst kompakte Bauweise ohne Notwendigkeit auf, zwei Einzelscheinwerfer über- oder nebeneinander anzuordnen und ist auch für mehrspurige Fahrzeuge verwendbar, wobei sämtliche Strahlen, die vom Außenreflektor ohne zusätzliche Umlenkung gebrochen werden, zur Bildung eines Lichtmusters so beitragen, als ob kein Innenreflektor vorhanden wäre.

Durch die Ausnutzung der gesamten relativ großen Abstrahlfläche des Außenreflektors wird dessen Lichtmuster unabhängiger von der Lagegenauigkeit der Wendel der Außenreflektorlampe und die Leuchtdichte an der Hell/Dunkelgrenze wird wesentlich erhöht.

Als charakteristisches Erscheinungsbild ergibt sich bei eingeschalteter Außenreflektorlampe der Eindruck eines Doppelscheinwerfers, da zwei voneinander getrennte Abstrahlzonen vorgesehen sind.

## Patentansprüche

1. Doppelreflektorscheinwerfer, bei dem ein Innenreflektor innerhalb eines Außenreflektors angeordnet ist und die Reflektoren in Leuchtrichtung tandemartig aufeinanderfolgen und über eine gemeinsame Deckscheibe abstrahlen, **dadurch gekennzeichnet, daß** der Außenreflektor ein Freiflächenreflektor ist, dessen Krümmungen so ausgebildet sind, daß der gesamte über den Außenreflektor abgegebene Lichtstrom am innerhalb des Außenreflektors angeordneten Innenreflektor vorbei reflektiert wird.

2. Scheinwerfer nach Anspruch 1, **dadurch gekennzeichnet, daß** Außenreflektor und Innenreflektor zumindest im wesentlichen dieselbe Höhe aufweisen, so daß neben einer vorzugsweise zentralen Abstrahlzone für Innenreflektorlicht zwei seitliche Abstrahlzonen für Außenreflektorlicht vorgesehen sind.

3. Scheinwerfer nach Anspruch 1 oder 2, **dadurch gekennzeichnet, daß** der Außenreflektor in seiner oberen Hälfte beidseitig seiner vertikalen Mittelebene eine Riffelung aufweist.

4. Scheinwerfer nach einem der Ansprüche 1 bis 3, **dadurch gekennzeichnet, daß** der Innenreflektor ein Reflektor mit zur optischen Achse parallelen, vorzugsweise senkrechten Seitenwänden ist.

5. Scheinwerfer nach Anspruch 4, **dadurch gekennzeichnet, daß** die gewölbte Rückfläche des Innenreflektors zumindest teilweise verspiegelt oder weiß ist.

6. Scheinwerfer nach einem der Ansprüche 1 bis 5, **dadurch gekennzeichnet, daß** in der Deckscheibe im Durchgangsbereich für Innenreflektorlicht V-förmige Streurippen zur Erzielung einer größeren Höhe der seitlichen Randbereiche des Lichtmusters vorgesehen sind.

7. Scheinwerfer nach einem der Ansprüche 1 bis 6, **dadurch gekennzeichnet, daß** dem Außenreflektor eine Lichtquelle mit horizontaler, vorzugsweise in der optischen Achse verlaufender Wendel und dem Innenreflektor eine Lichtquelle mit horizontaler, im rechten Winkel zur optischen Achse verlaufender Wendel zugeordnet ist.

8. Scheinwerfer nach einem der Ansprüche 1 bis 7, **dadurch gekennzeichnet, daß** der Scheinwerfer in Vertikalrichtung zwischen zwei Anschlägen verschwenkbar ist.

## Claims

1. Double-reflector headlamp, wherein an inner reflector is disposed inside an outer reflector and the reflectors are arranged one behind the other in a tandem-like manner in the direction of illumination and said reflectors emit light via a common cover disk, **characterised in that** the outer reflector is an open surface reflector whose curvatures are designed in such a manner that the entire light flow emitted via the outer reflector is reflected past the inner reflector disposed inside the outer reflector.

2. Headlamp according to claim 1, **characterised in that** the outer reflector and the inner reflector are at least essentially at the same height, so that in addition to a preferably central light-emitting zone for the inner reflector light there are two lateral light-emitting zones for the outer reflector light.

3. Headlamp according to claim 1 or 2, **characterised in that** the outer reflector comprises ribbing in its upper half on both sides of its vertical middle plane.

4. Headlamp according to any one of claims 1 to 3, **characterised in that** the inner reflector is a reflector which comprises lateral walls which are parallel with respect to the optical axis and are preferably perpendicular.

5. Headlamp according to claim 4, **characterised in that** the curved rear surface of the inner reflector is at least partially metal-coated or white.

6. Headlamp according to any one of claims 1 to 5, **characterised in that** V-shaped scattering ribs are provided in the cover disk in the through-going region for the inner reflector light in order to achieve a greater height of the lateral marginal regions of the light pattern.

7. Headlamp according to any one of claims 1 to 6, **characterised in that** a light source which has a horizontal helix, preferably extending in the optical axis, is allocated to the outer reflector and a light source which has a horizontal helix, extending at a right angle with respect to the optical axis, is allocated to the inner reflector.

8. Headlamp according to any one of claims 1 to 7, **characterised in that** the headlamp can pivot in the vertical direction between two stops.

## Revendications

1. Phare à double réflecteur dans lequel un réflecteur intérieur est placé à l'intérieur d'un réflecteur extérieur, les réflecteurs étant installés consécutivement en tandem dans la direction d'éclairage et rayonnant par l'intermédiaire d'un verre de protection commun, **caractérisé en ce que** le réflecteur extérieur est un réflecteur à facettes dont les courbures sont configurées de telle façon que la totalité du rayon lumineux dispensé par l'intermédiaire du réflecteur extérieur est reflétée dans le réflecteur intérieur placé à l'intérieur du réflecteur extérieur.

2. Phare selon la revendication 1, **caractérisé en ce que** le réflecteur extérieur et le réflecteur intérieur présentent, au moins pour l'essentiel, la même hauteur de sorte que, outre une zone de rayonnement central préférée pour la lumière du réflecteur intérieur, deux zones de réflexion latérales sont ménagées pour la lumière du réflecteur extérieur.

3. Phare selon la revendication 1 ou 2, **caractérisé en ce que** le réflecteur extérieur présente des striures dans sa moitié supérieure bilatéralement par rapport à son plan médian vertical.

4. Phare selon l'une quelconque des revendications 1 à 3, **caractérisé en ce que** le réflecteur intérieur est un réflecteur possédant des parois latérales de préférence verticales, parallèles à l'axe optique.

5. Phare selon la revendication 4, **caractérisé en ce que** la face arrière bombée du réflecteur intérieur est au moins en partie métallisée ou blanche.

6. Phare selon l'une quelconque des revendications 1 à 5, **caractérisé en ce que** le verre de protection dans la zone de passage de la lumière du réflecteur intérieur comprend des stries en forme de V de façon à obtenir une plus grande hauteur du bord latéral du rayon lumineux.

7. Phare selon l'une quelconque des revendications 1 à 6, **caractérisé en ce qu'**une source lumineuse avec un filament spiralé passant horizontalement de préférence dans l'axe optique est coordonnée au réflecteur extérieur et **en ce qu'**une source lumineuse avec un filament spiralé passant horizontalement à angle droit de l'axe optique est coordonnée au réflecteur intérieur.

8. Phare selon l'une quelconque des revendications 1 à 7, **caractérisé en ce que** le phare peut être orienté en direction verticale entre deux butées.
